**Europäisches Patentamt**

(19) **European Patent Office**

**Office européen des brevets**

(11) Numéro de publication: **0 286 504**
**B1**

(12) **FASCICULE DE BREVET EUROPEEN**

(45) Date de publication du fascicule du brevet:
07.11.90

(51) Int. Cl.⁵: **B60T 13/74**, B60T 13/58, F16D 65/16

(21) Numéro de dépôt: **88400730.3**

(22) Date de dépôt: **25.03.88**

(54) **Actionneur de frein hydraulique à commande électrique.**

(30) Priorité: **26.03.87 FR 8704203**

(43) Date de publication de la demande:
**12.10.88 Bulletin 88/41**

(45) Mention de la délivrance du brevet:
**07.11.90 Bulletin 90/45**

(84) Etats contractants désignés:
**DE ES FR GB IT**

(56) Documents cités:
**EP-A- 0 025 714**
**FR-A- 2 210 532**
**GB-A- 2 053 394**
**GB-A- 2 156 021**
**US-A- 2 374 909**

(73) Titulaire: **BENDIX EUROPE Services Techniques S.A.,**
**126 rue de Stalingrad, F-93700 Drancy(FR)**

(72) Inventeur: **Fargier, Eric, 13, Avenue du Maréchal Foch,**
**F-93360 Neuilly-Plaisance(FR)**

(74) Mandataire: **Lejet, Christian, Bendix Europe Service**
**Techniques Service Brevets 126 rue de Stalingrad,**
**F-93700 Drancy(FR)**

## Description

L'invention concerne un actionneur de frein hydraulique, notamment de frein à disque, commandé électriquement, cet actionneur étant conçu pour être utilisé dans l'installation de freinage d'un véhicule.

Le document FR-A-2 210 532 décrit une installation de freinage de véhicule, dans laquelle la montée en pression des actionneurs de frein est commandée par une pompe entraînée par un moteur électrique. La tension d'alimentation de ce moteur dépend de la position occupée par la pédale de frein. L'actionnement de la pompe a pour effet de transférer du liquide de freinage d'un réservoir de liquide de freinage dans les actionneurs de frein.

Une telle installation de freinage est particulièrement intéressante lorsque le véhicule est équipé de moyens pour détecter le glissement d'une ou plusieurs des roues sur le sol lors du freinage. En effet, comme le décrit le document FR-A-2 210 532, la tension d'alimentation du moteur électrique entraînant la pompe peut être contrôlée afin de moduler l'intensité du freinage en fonction de l'adhérence des roues sur le sol.

Dans l'installation décrite dans le document FR-A-2 210 532, le moteur électrique, la pompe, le réservoir et l'actionneur sont totalement séparés, ce qui donne à l'installation un encombrement important. De plus, le relatif éloignement entre la pompe et l'actionneur conduit à accroître les temps de réponse, ce qui est pénalisant dans le cas où la tension d'alimentation du moteur est pilotée lors du freinage en fonction du glissement relatif des roues sur le sol. Ce relatif éloignement entre les différents éléments constituant le circuit hydraulique de commande des actionneurs conduit également à accroître la longueur des tuyauteries reliant ces éléments et, par conséquent, le risque de fuites dans ce circuit.

L'invention a précisément pour objet un actionneur de frein hydraulique à commande électrique présentant une structure compacte englobant à la fois l'actionneur proprement dit, les différents éléments du circuit hydraulique assurant sa commande et le moteur électrique entraînant la pompe de ce circuit, de sorte que les temps de réponse sont très courts et que les risques de fuite sont sensiblement réduits par rapport à l'état de la technique.

On connaît, du document EP-A 0 025 714 qui correspond au préambule de la Revendication 1, un actionneur de frein hydraulique à commande électrique mettant en oeuvre une téchnologie de pompe multi-pistons. Cette technologie demande une très grande précision notamment dans la position axiale de la bobine utilisée.

La présente invention cherche à pallier cet inconvénient par la mise en oeuvre d'une technologie à piston unique et vilebrequin.

L'invention concerne donc, plus précisément, un actionneur de frein hydraulique à commande électrique comprenant un corps, un piston de frein apte à coulisser parallèlement à son axe dans le corps et délimitant avec ce dernier une chambre de commande principale qui communique par un conduit de refoulement avec une pompe entraînée par un arbre de sortie d'un moteur électrique, la pompe communiquant avec un réservoir de liquide de freinage par un conduit d'admission, un conduit de recyclage contrôlé par une électrovanne logée dans le corps reliant sélectivement la chambre de commande principale et le réservoir, le réservoir étant formé dans le corps et le moteur électrique fixé sur ce corps, la pompe comprenant une chambre de pompage à volume variable formée dans le corps et délimitée en partie par une extrémité d'un piston plongeur logé dans le corps et dont l'extrémité opposée est reliée à l'arbre de sortie du moteur électrique par un mécanisme transformant une rotation de l'arbre en un mouvement de va-et-vient du piston plongeur parallèlement à l'axe, une soupape d'admission et une soupape de refoulement étant logées respectivement dans les conduits d'admission et de refoulement, à l'intérieur du corps.

Selon l'invention l'axe de l'arbre de sortie du moteur électrique est perpendiculaire à l'axe du piston plongeur, et le mécanisme comprend un vilebrequin porté par l'arbre et des moyens élastiques prenant appui sur le corps pour maintenir en permanence le piston plongeur en appui sur vilebrequin.

Selon un aspect de l'invention, le corps comprend une partie cylindrique qui fait saillie dans un évidement cylindrique formé dans le piston de frein selon l'axe de ce piston, la chambre de commande principale étant délimitée entre l'extrémité de la partie cylindrique du corps et le fond de l'évidement, le piston plongeur et les soupapes d'admission et de refoulement étant logés dans cette partie cylindrique, dans laquelle est également formée la chambre de pompage.

De préférence, une deuxième chambre de commande séparée de la chambre de commande principale par des moyens d'étanchéité est formée entre une partie tubulaire du piston entourant l'évidement et un cylindre appartenant au corps et dans lequel coulisse partie tubulaire du piston.

Un mode de réalisation préféré de l'invention va maintenant être décrit, à titre d'exemple nullement limitatif, en se référant aux dessins annexés dans lesquels :

- la figure 1 est une vue de côté et en coupe représentant un frein à disque équipé d'un actionneur conforme à l'invention ; et

- la figure 2 est une vue de dessus schématique, en coupe partielle, du frein à disque représenté sur la figure 1.

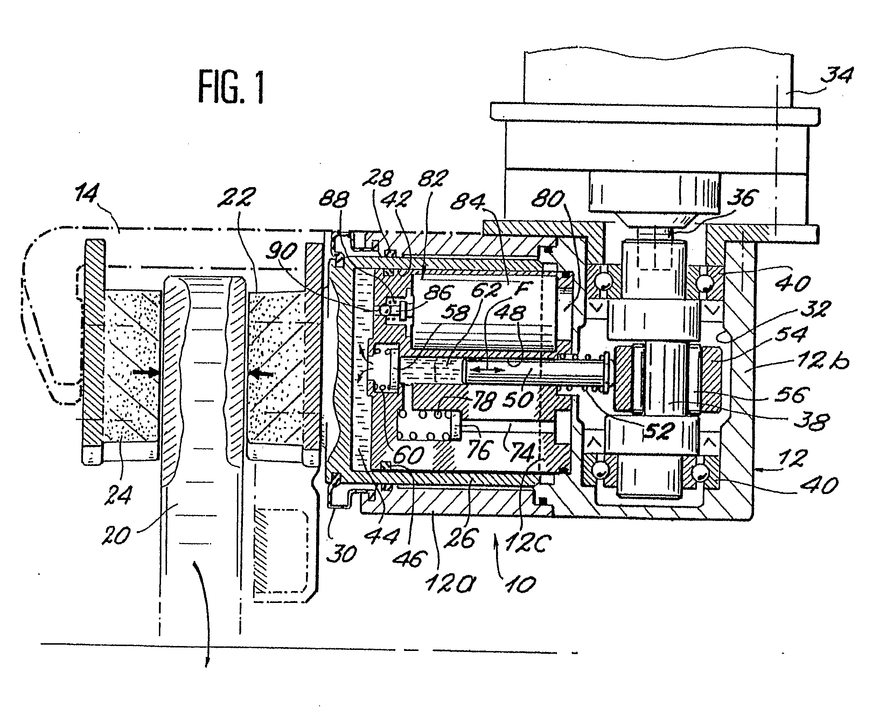

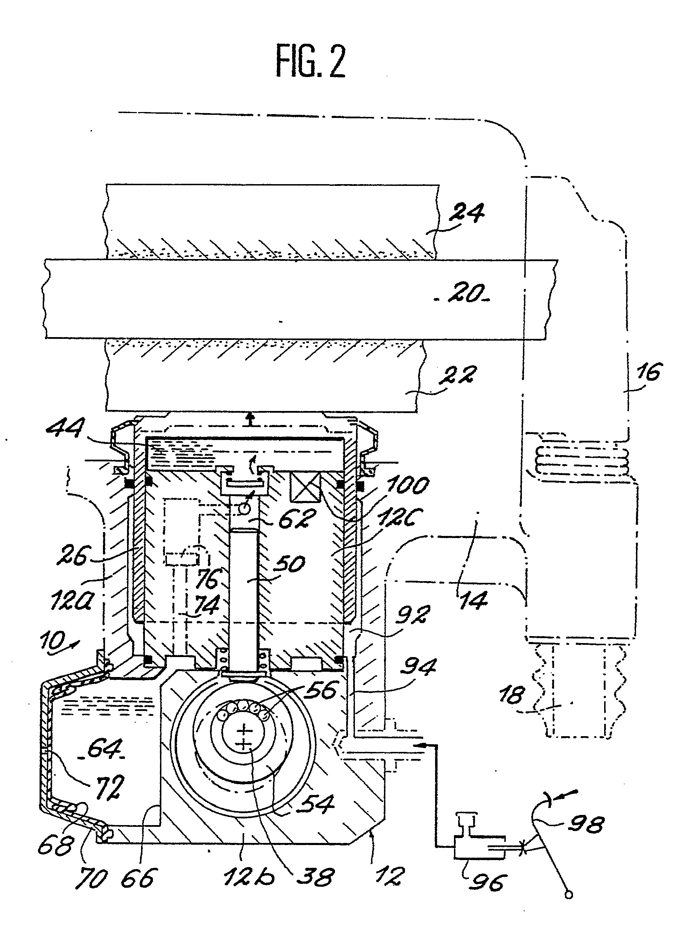

Les figures 1 et 2 représentent un frein à disque équipé d'un actionneur désigné de façon générale par la référence 10. Cet actionneur comprend un corps 12 solidaire d'un étrier de frein 14. L'étrier 14 est monté sur un organe de supportage 16 fixé sur une partie non tournante proche d'une roue du véhicule, telle qu'une fusée d'essieu. Plus précisément, l'étrier 14 est supporté de façon coulissante par au moins une colonne 18 (figure 2) fixée au support 16 et s'étendant parallèlement à l'axe d'un disque de frein 20 fixé sur une partie tournante telle qu'une roue du véhicule.

De façon connue, l'actionneur 10 permet d'appliquer directement sur une première face du disque 20 un patin de frein 22 supporté de façon coulissante par l'étrier 14, selon une direction parallèle à l'axe du disque. L'étrier 14 supporte également un deuxième patin de frein 24 apte à être appliqué sur la face opposée du disque 20, lors d'une mise en oeuvre de l'actionneur 10, à la suite du coulissement de l'étrier 14 le long de la colonne 18, consécutif à l'application du patin 22 contre la première face du disque 20.

Bien entendu, l'actionneur 10 selon l'invention peut être utilisé dans un frein d'un type différent et notamment dans un frein à disque dans lequel chacun des patins est appliqué séparément contre la face correspondante du disque par un actionneur différent.

Comme l'illustre bien la figure 1, le corps 12 de l'actionneur comprend un cylindre 12a dans lequel coulisse de façon étanche un piston de frein 26. L'axe commun au cylindre 12a et au piston 26 est parallèle à l'axe du disque 20. L'étanchéité entre le cylindre 12a et la surface extérieure du piston 26 est assurée par un joint d'étanchéité annulaire 28. La protection de la partie du piston 26 faisant saillie hors du cylindre 12a est assurée quant à elle par un soufflet d'étanchéité déformable 30.

Le corps 12 de l'actionneur comprend également une partie arrière 12b, solidarisée de façon étanche du cylindre 12a à l'extrémité de celui-ci la plus éloignée du patin 22. Cette partie 12b présente un évidement généralement cylindrique 32, d'axe perpendiculaire à l'axe du cylindre 12a et du piston 26. Dans l'exemple de réalisation représenté, l'axe de cet évidement coupe l'axe du disque 20. L'évidement 32 est ouvert à l'une de ses extrémités, de façon à permettre la fixation et le centrage d'un moteur électrique à courant continu 34 dont l'arbre de sortie 36 pénètre dans l'évidement 32, selon l'axe de celui-ci. A l'intérieur de l'évidement 32, l'arbre de sortie 36 du moteur électrique 34 est solidarisé d'un vilebrequin 38 supporté de façon tournante selon l'axe de cet évidement par des paliers à billes 40.

Le corps 12 de l'actionneur comprend enfin une partie cylindrique 12c qui fait saillie dans un évidement cylindrique 42 formé dans le piston 26, selon l'axe de ce dernier, et débouchant du côté opposé au patin de frein 22. Cette partie cylindrique 12c est fixée de façon étanche à la partie 12b du corps de l'actionneur. Une chambre de commande principale 44 est ainsi délimitée entre l'extrémité de la partie cylindrique 12c du corps de l'actionneur et le fond de l'évidement cylindrique 42 formé dans le piston 26. L'étanchéité de cette chambre 44 est préservée au moyen d'un joint d'étanchéité annulaire 46 monté dans une gorge annulaire formée à proximité de l'extrémité de la partie cylindrique 12c, sur la surface extérieure de celle-ci. Ce joint 46 est en appui étanche sur la surface intérieure cylindrique de l'évidement 42.

De préférence, les joints d'étanchéité 28 et 46 interposés entre le piston 26 et le corps 12 de l'actionneur sont des joints carrés. Ces joints assurent le recul du piston 26 lorsque la pression de freinage est relâchée.

La partie cylindrique 12c du corps de l'actionneur est traversée selon l'axe commun à cette partie 12c et au piston 26 par un alésage 48 dans lequel est reçu de façon coulissante un piston plongeur 50. L'extrémité de ce piston plongeur opposée au patin de frein 22 fait saillie en dehors de l'alésage 48 et pénètre dans l'évidement 32 formé dans la partie 12b du corps de l'actionneur, au travers d'un trou formé dans cette partie en face de l'alésage 48. Un ressort de compression 52 dont les extrémités prennent appui respectivement sur un épaulement formé sur la partie 12c du corps de l'actionneur et sur un épaulement formé sur l'extrémité précitée du piston plongeur 50 maintient en permanence cette extrémité en appui sur une bague 54 portée par la partie centrale du vilebrequin 38, excentrée par rapport à l'axe de l'arbre de sortie 36 du moteur électrique 34. La bague 54 est montée sur la partie centrale du vilebrequin 38 par des aiguilles 56 permettant à la bague de ne pas tourner lorque le vilebrequin est entraîné en rotation par le moteur électrique. Cette caractéristique permet d'assurer un contact sans frottement entre le piston plongeur 50 et la bague 54.

Pour éviter des problèmes d'usure, le piston plongeur 50 fonctionne sans joint. Du liquide de freinage passe ainsi dans la chambre qui reçoit la partie centrale du vilebrequin et la bague 54.

Dans sa partie la plus proche de la chambre 44, l'alésage 48 s'élargit pour former un épaulement tourné vers la chambre 44. Un clapet 58 est appliqué sur cet épaulement par un ressort de compression 60 prenant appui sur un rebord formé à l'extrémité de l'alésage 48 débouchant dans la chambre de commande principale 44. La partie de l'alésage 48 située entre le clapet 58 et l'extrémité du piston plongeur 50 la plus proche de ce clapet constitue une chambre de pompage 62 à volume variable. Plus précisément, le volume de la chambre de pompage 62 augmente et diminue de façon cyclique sous l'effet du mouvement de va-et- vient du piston plongeur 50 (flèche f sur la figure 1) produit par la rotation du vilebrequin 38 commandée par le moteur électrique 34. L'ensemble formé par le vilebrequin 38, le piston plongeur 50 et la chambre 62 constitue ainsi une pompe.

Comme l'illustre la figure 2, la partie 12b du corps de l'actionneur sert également à loger un réservoir 64 de liquide de freinage. Ce réservoir 64 est formé à l'intérieur d'un évidement cylindrique 66 d'axe perpendiculaire à l'axe de l'arbre 36 du moteur électrique 34 et orthogonal à l'axe du disque 20. Cet évidement 66 est obturé vers l'extérieur par une membrane d'étanchéité déformable 68 fixée par un capot 70 en forme de cuvette sur la partie 12b du corps de l'actionneur. Le capot 70 est percé d'au moins un trou 72 par lequel la face extérieure de la membrane 68 est soumise à la pression atmosphérique.

Le réservoir 64 de liquide de freinage communique avec la chambre de pompage 62 par un conduit d'admission 74 formé dans les parties 12b et 12c du corps de l'actionneur. Ce conduit d'admission 74 présente, dans la partie 12c, une zone de plus grand diamètre dans laquelle est logé un clapet 76 appliqué contre un épaulement formé à l'extrémité de cette zone de plus grand diamètre la plus éloignée du patin de frein 22 par un ressort 78 prenant appui sur l'extrémité opposée de cette zone du conduit 74.

L'ensemble formé par le clapet 76 et par le ressort 78 constitue une soupape d'admission permettant au fluide de freinage de circuler du réservoir 64 vers la chambre de pompage 62, tout en empêchant la circulation en sens inverse.

De même, l'ensemble constitué par le clapet 58 et le ressort 60 constitue une soupape de refoulement permettant au fluide de freinage de circuler de la chambre de pompage 62 vers la chambre de commande principale 44, tout en empêchant la circulation en sens inverse. La partie de l'alésage 48 contenant cette soupape de refoulement constitue ainsi un conduit de refoulement par lequel les chambres 62 et 44 communiquent.

Le retour du liquide de freinage de la chambre de commande principale dans le réservoir 64 s'effectue par un conduit de recyclage traversant les parties 12b et 12c du corps de l'actionneur et dont une partie seulement apparaît en 80 sur la figure 1.

On trouve ainsi, à l'intérieur du corps 12 de l'actionneur, un circuit hydraulique fermé, rempli de liquide de freinage, et comprenant le réservoir 64, le conduit d'admission 74 contrôlé par la soupape d'admission (clapet 76, ressort 78) la chambre de pompage 62, le conduit de refoulement contrôlé par la soupape de refoulement (clapet 58, ressort 60), la chambre de commande principale 44 et le conduit de recyclage 80.

Dans le mode de réalisation représenté sur la figure 1, le retour du liquide de freinage de la chambre 44 dans le réservoir 64 au travers du conduit de recyclage 80 est contrôlé par une électrovanne 82 montée dans la partie cylindrique 12c du corps de l'actionneur, selon un axe parallèle à l'axe commun au piston plongeur 50 et au piston de frein 26. Cette électrovanne 82 comprend un bobinage 84 et un noyau commandant le déplacement parallèlement audit axe d'une tige de poussée 86 à extrémité hémisphérique 90. Une partie du conduit de recyclage passe autour du noyau de l'électrovanne.

Lorsque l'électrovanne 82 n'est pas excitée, un ressort 88 écarte l'extrémité hémisphérique 90 de la tige 86 de son siège. Dans ces conditions, la circulation du liquide de freinage de la chambre 44 vers le réservoir 64 est permise.

Au contraire, lorsque le bobinage 84 de l'électrovanne 82 est excité, la tige 86 applique son extrémité hémisphérique 90 contre son siège formé dans le conduit de recyclage 80, à l'encontre du ressort 88. La circulation entre la chambre de commande principale 44 et le réservoir 64 est alors empêchée dans les deux sens.

Comme l'illustre mieux la figure 2, une deuxième chambre de commande 92 isolée de façon étanche de la chambre de commande principale 44 est formée entre le piston 26 et le corps 12 de l'actionneur. Cette chambre de commande 92 est une chambre annulaire délimitée entre le cylindre 12a, la partie cylindrique 12c et la partie tubulaire du piston 26 entourant cette partie cylindrique 12c.

Un passage 94 formé dans la partie 12b du corps de l'actionneur permet de raccorder cette deuxième chambre de commande 92 à un circuit hydraulique de freinage de conception classique, indépendant du circuit commandant la mise en oeuvre du moteur électrique 34. Comme on l'a représenté schématiquement sur la figure 2, ce circuit hydraulique comprend de façon connue un maître-cylindre 96 commandé par la pédale de frein 98, qui actionne le moteur électrique en début de course de pédale.

En fonctionnement normal, ce circuit hydraulique est mis à la pression d'un réservoir basse pression.

La figure 2 représente également de façon schématique un manomètre 100 monté dans la partie cylindrique 12c du corps de l'actionneur, de façon à pouvoir mesurer la pression régnant dans la chambre de commande principale 44 de cet actionneur. Des conducteurs électriques (non représentés) logés en partie dans le corps 12 de l'actionneur permettent de transmettre les signaux délivrés par le manomètre 100 à un circuit extérieur (non représenté) comparant la valeur de la pression mesurée à une valeur théorique établie en fonction de la position de la pédale de frein 98, mesurée par ailleurs. Ainsi, en affectant à chaque position de la pédale de frein 98 une pression de freinage dans la chambre de commande principale 44, l'intensité du freinage peut être régulée de la manière qui va maintenant être décrite.

Lorsque le conducteur actionne la pédale de frein 98, des circuits électriques (non représentés) commandent simultanément l'alimentation électrique du moteur à courant continu 34 et l'excitation du bobinage de l'électrovanne 82.

Le moteur électrique 34 étant sous tension, il entraîne en rotation à vitesse constante le vilebrequin 38, ce qui a pour conséquence un mouvement de va-et-vient du piston plongeur 50 dans l'alésage 48. Par l'intermédiaire de la chambre 62 et des soupapes d'admission et de refoulement constituées par les clapets 76 et 58 et par leur ressort de rappel, un effet de pompage du liquide de freinage est obtenu du réservoir 64 dans la chambre de commande principale 44.

L'électrovanne 82 étant excitée ferme alors le conduit de recyclage 80 reliant la chambre 44 et le réservoir 64. La pression dans la chambre de commande 44 s'élève alors progressivement, ce qui a pour effet de déplacer le piston 26 dans le corps 12 de l'actionneur jusqu'à la venue en contact du patin de frein 22 contre la face correspondante du disque 20. Par réaction, l'étrier 14 coulisse sur les colonnes 18 et le patin de frein 24 vient à son tour en contact contre la face opposée du disque 20. Un effet de freinage est ainsi obtenu. Cet effet est d'autant plus important que la pression atteinte dans la chambre 44 est élevée.

A titre d'illustration nullement limitative, un freinage efficace peut être obtenu en 0,2s en utilisant un moteur électrique tournant à environ 3000 tours/mn et un volume de pompage unitaire, déterminé par la course du piston plongeur 50 dans l'alésage 48, d'environ 240 mm³.

Lorsque la pression dans la chambre 44 atteint la valeur correspondant à la position de la pédale de frein 98, l'alimentation du moteur électrique 34 est stoppée. L'électrovanne 82 reste excitée tant que la pédale de frein 98 reste dans cette position, afin de maintenir la pression dans la chambre 44.

Lorsque le conducteur relâche la pédale de frein 98, l'excitation de l'électrovanne 82 cesse, de sorte que le liquide de freinage contenu dans la chambre 44 retourne dans le réservoir 64. L'action de freinage est alors interrompue.

Un tel actionneur peut avantageusement être utilisé sur un véhicule équipé par ailleurs de moyens de détection d'un éventuel glissement d'une ou plusieurs des roues du véhicule sur le sol. Dans ce cas, l'électrovanne 82 de l'actionneur peut être avantageusement utilisée pour piloter le freinage, aussi bien lors de la montée en pression dans la chambre 44 que lors de la baisse de pression dans cette chambre, en réponse à des signaux délivrés par un circuit électronique associé aux moyens de détection précités. En faisant battre l'électrovanne à différentes fréquences, on module ainsi à volonté la pente de variation de pression dans la chambre 44, quelle que soit la position de la pédale de frein 98.

Les moyens de détection du glissement des roues (capteurs de vitesses) ainsi que le circuit électronique associé ne font pas partie de la présente invention et peuvent être constitués par tout moyen connu permettant de réaliser les fonctions correspondantes. Aucune description n'en sera faite ici.

En cas de défaillance du circuit électrique d'alimentation du moteur 34, la pression engendrée dans le maître-cylindre lors de l'actionnement de la pédale de frein 98 est injectée directement dans la chambre 92 et assure l'actionnement du frein.

Le circuit hydraulique comprenant le maître-cylindre 96 peut aussi assurer le freinage lors du stationnement du véhicule. Un levier de frein à main (non représenté) agit alors sur le maître-cylindre de la même manière que la pédale 98.

Bien entendu, le mode de réalisation de l'invention qui vient d'être décrit peut subir différentes variantes sans sortir du cadre de l'invention. Ainsi, et uniquement à titre d'exemple, on notera que le mouvement de va-et-vient du piston plongeur 50 peut être commandé par un système bielle-manivelle entraîné par l'arbre de sortie du moteur électrique.

## Revendications

1. Actionneur de frein hydraulique à commande électrique comprenant un corps (12), un piston de frein (26) apte à coulisser parallèlement à son axe dans le corps et délimitant avec ce dernier une chambre de commande principale (44) qui communique par un conduit de refoulement avec une pompe (38, 50, 62) entraînée par un arbre de sortie (36) d'un moteur électrique (34), ladite pompe communiquant avec un réservoir de liquide de freinage (64) par un conduit d'admission (74), un conduit de recyclage (80) contrôlé par une électrovanne (82) logée dans le corps (12) reliant sélectivement la chambre de commande principale (44) et le réservoir (64), le réservoir (64) étant formé dans le corps (12) et le moteur électrique (34) fixé sur ce corps (12), la pompe (38, 50, 62) comprenant une chambre de pompage à volume variable (62) formée dans le corps (12) et délimitée en partie par une extrémité d'un piston plongeur (50) logé dans le corps (12) et dont l'extrémité opposée est reliée à l'arbre de sortie (36) du moteur électrique (34) par un mécanisme (38, 52) transformant une rotation dudit arbre en un mouvement de va-et-vient du piston plongeur (50) parallèlement audit axe, une soupape d'admission (76, 78) et une soupape de refoulement (58, 60) étant logées respectivement dans les conduits d'admission et de refoulement, à l'intérieur du corps (12), caractérisé en ce que l'axe de l'arbre de sortie (36) du moteur électrique (34) est perpendiculaire à l'axe du piston plongeur (50), ledit mécanisme comprenant un vilebrequin (38) porté par ledit arbre et des moyens élastiques (52) prenant appui sur le corps (12) pour maintenir en permanence le piston plongeur (50) en appui sur le vilebrequin (38).

2. Actionneur selon la revendication 1, caractérisé en ce qu'un manomètre (100) étant placé dans la chambre de commande principale (44) pour délivrer un signal représentatif de la pression du liquide dans cette chambre à des moyens pour comparer ce signal à un signal représentatif de la position de la pédale de frein, de manière à asservir cette pression à ladite position de la pédale.

3. Actionneur selon l'une quelconque des revendications précédentes, caractérisé en ce que le corps (12) comprend une partie cylindrique (12c) qui fait saillie dans un évidement cylindrique (42) formé dans le piston de frein (26) selon l'axe de ce piston, la chambre de commande principale (44) étant délimitée entre l'extrémité de la partie cylindrique du corps (12) et le fond de l'évidement (42), le piston plongeur (50) et les soupapes d'admission (76, 78) et le refoulement (58, 60) étant logés dans ladite partie cylindrique, dans laquelle est également formée la chambre de pompage (62).

4. Actionneur selon la revendication 3, caractérisé en ce qu'une deuxième chambre de commande (92) séparée de la chambre de commande principale (44) par des moyens d'étanchéité (46) est formée entre une partie tubulaire du piston (26) entourant ledit évidement (42) et un cylindre (12a) appartenant au corps et dans lequel coulisse ladite partie tubulaire du piston.

5. Actionneur selon l'une quelconque des revendications précédentes, caractérisé en ce que les axes du piston plongeur (50) et du piston de frein (26) sont confondus.

## Patentansprüche

1. Hydraulische Bremsbetätigungsvorrichtung mit elektrischer Steuerung, mit einem Körper (12), einem Bremskolben (26), der dazu geeignet ist, in dem Körper parallel zu seiner Achse zu gleiten und mit diesem eine Hauptsteuerkammer (44) begrenzt, welche über eine Druckleitung mit einer Pumpe (38, 50, 62) verbunden ist, die durch eine Abtriebswelle (36) eines elektrischen Motors (34) angetrieben wird, wobei diese Pumpe über eine Einlaßleitung (74) mit einem Bremsflüssigkeits-Behälter (64) in Verbindung steht, wobei eine Kreislaufleitung (80), die durch ein in dem Körper angebrachtes Elektroventil (82) gesteuert ist, selektiv die Hauptsteuerkammer (44) mit dem Behälter (64) verbindet, wobei der Behälter (64) in dem Körper (12) ausgebildet ist und der elektrische Motor (34) auf diesem Körper (12) befestigt ist, wobei die Pumpe (38, 50, 62) eine Pumpenkammer (62) mit veränderlichem Volumen umfaßt, die in dem Körper (12) ausgebildet ist und teilweise durch ein Ende eines Tauchkolbens (50) begrenzt ist, der in dem Körper (12) gelagert ist und dessen entgegengesetztes Ende mit der Abtriebswelle (36) des elektrischen Motors (34) über eine Vorrichtung (38, 52) verbunden ist, die eine Drehung der genannten Welle in eine Hin-und Herbewegung des Tauchkolbens (50) parallel zu dieser Achse umwandelt, wobei ein Einlaßventil (76, 78) in der Einlaßleitung sowie ein Auslaßventil (58, 60) in der Rückleitung innerhalb des Körpers (12) angebracht ist, dadurch gekennzeichnet, daß die Achse der Abtriebswelle (36) des elektrischen Motors (34) zu der Achse des Tauchkolbens (50) senkrecht ist, wobei die genannte Vorrichtung eine Kurbelwelle (38) umfaßt, die von der genannten Welle sowie von elastischen Mitteln (52) getragen ist, die sich auf dem Körper (12) abstützen, um den Tauchkolben (50) dauernd gegen die Kurbelwelle (38) abgestützt zu halten.

2. Betätigungsvorrichtung nach Anspruch 1, dadurch gekennzeichnet, daß ein Manometer (100) in der Hauptsteuerkammer (44) angeordnet ist, um ein Signal, das für den Druck der Flüssigkeit in dieser Kammer repräsentativ ist, an Mittel abzugeben, die dieses Signal mit einem Signal vergleichen, das für die Position des Bremspedals repräsentativ ist, so daß dieser Druck der genannten Position des Pedals nachgeregelt wird.

3. Betätigungsvorrichtung nach einem der vorstehenden Ansprüche, dadurch gekennzeichnet, daß der Körper (12) einen zylindrischen Teil (12c) aufweist, der in eine zylindrische Aussparung (42), die in dem Bremskolben (26) entlang der Achse dieses Kolbens gebildet ist, hineinragt, wobei die Hauptsteuerkammer (44) zwischen dem Ende des zylindrischen Teils des Körpers (12) und dem Boden der Aussparung (42) begrenzt ist, der Tauchkolben (50), die Einlaßventile (76, 78) sowie die Auslaßventile (58, 60) in diesem zylindrischen Teil angebracht sind, in welchem auch die Pumpenkammer (62) gebildet ist.

4. Betätigungsvorrichtung nach Anspruch 3, dadurch gekennzeichnet, daß eine zweite Steuerkammer (92), die durch Dichtungsmittel (46) von der Hauptsteuerkammer (44) getrennt ist, zwischen einem Rohrteil des Kolbens (26), der die genannte Aussparung (42) umgibt, und einem Zylinder (12a), der dem Körper angehört und in welchem der genannte Rohrteil des Kolbens gleitet, gebildet ist.

5. Betätigungsvorrichtung nach einem der vorstehenden Ansprüche, dadurch gekennzeichnet, daß die Achsen des Tauchkolbens (50) und des Bremskolbens (26) übereinstimmen.

**Claims**

1. Electrically controlled hydraulic brake actuator comprising a body (12) and a brake piston (26) designed to slide parallel to its axis in the body and delimiting, together with the latter, a main control chamber (44) which communicates via a delivery duct with a pump (38, 50, 62) driven by means of an output shaft (36) of an electric motor (34), the said pump communicating with a brake-fluid reservoir (64) via an intake duct (74), and a recycling duct (80) controlled by a solenoid valve (82) accommodated in the body (12) selectively connecting the main control chamber (44) and the reservoir (64), the reservoir (64) being formed in the body (12) and the electric motor (34) fastened to this body (12), the pump (38, 50, 62) comprising a variable-volume pumping chamber (62) formed in the body (12) and partially delimited by one end of a plunger piston (50) which is accommodated in the body (12) and the opposite end of which is connected to the output shaft (36) of the electric motor (34) by means of a mechanism (38, 52) converting a rotation of the said shaft into a to-and-fro movement of the plunger piston (50) parallel to the said axis, an intake valve (76, 78) and a delivery valve (58, 60) being accommodated respectively in the intake and delivery ducts on the inside of the body (12), characterized in that the axis of the output shaft (36) of the electric motor (34) is perpendicular to the axis of the plunger piston (50), the said mechanism comprising a crankshaft (38) carried by the said shaft and elastic means (52) bearing on the body (12) in order to keep the plunger piston (50) permanently up against the crankshaft (38).

2. Actuator according to Claim 1, characterized in that a pressure gauge (100) being (sic) placed in the main control chamber (44) in order to supply a signal representing the pressure of the fluid in this chamber to means for comparing this signal with a signal representing the position of the brake pedal, so as to subject this pressure to the said position of the pedal.

3. Actuator according to any of the preceding claims, characterized in that the body (12) comprises a cylindrical part (12c) which projects into a cylindrical recess (42) made in the brake piston (26) in the axis of this piston, the main control chamber (44) being delimited between the end of the cylindrical part of the body (12) and the bottom of the recess (42), and the plunger piston (50) and the intake and delivery valves (76, 78) and (58, 60) being accommodated in the said cylindrical part, in which the pumping chamber (62) is also formed.

4. Actuator according to Claim 3, characterized in that a second control chamber (92) separated from the main control chamber (44) by sealing means (46) is formed between a tubular part of the piston (26) surrounding the said recess (42) and a cylinder (12a) which belongs to the body and in which the said tubular part of the piston slides.

5. Actuator according to any of the preceding claims, characterized in that the axes of the plunger piston (50) and of the brake piston (26) merge with one another.

FIG. 1

# FIG. 2